# EUROPÄISCHE PATENTSCHRIFT

(11) **EP 2 389 720 B1**
(45) Veröffentlichungstag und Bekanntmachung des Hinweises auf die Patenterteilung: **09.11.2016**
(21) Anmeldenummer: 09753124.8
(22) Anmeldetag: 19.11.2009
(51) Int. Cl.: H02K 1/27, H02K 11/00, H02K 11/33, F03D 9/00, H02K 7/18

(54) **POLRAD EINER WINDENERGIEANLAGE**
POLE WHEEL FOR A WIND TURBINE
ROUE POLAIRE D'ÉOLIENNE

(30) Priorität: 23.01.2009 DE 102009005960
(43) Veröffentlichungstag der Anmeldung: 30.11.2011
(73) Patentinhaber: NGT New Global Technology GmbH, 4153 Reinach (CH)
(72) Erfinder: LANGE, Detlef, 46147 Oberhausen (DE); RUPPRICH, Dieter, 48465 Ohne (DE); BODENSTEIN, Klaus, Hong Kong (CN)
(74) Vertreter: Schwarz, Ingeborg
(86) Internationale Anmeldenummer: PCT/EP2009/065453
(87) Internationale Veröffentlichungsnummer: WO 2010/083906

(56) Entgegenhaltungen:
- EP-A2- 1 959 132
- WO-A1-2008/014584
- DE-A1-102007 024 528
- US-B1- 6 285 090

## Beschreibung

Die Erfindung richtet sich auf einen Rotor eines Generators einer Windkraftanlage oder einer Windenergieanlage mit einem in einem oder um einen Stator rotierenden, ein Polradgehäuse aufweisenden Polrad, wobei die Flügel des Windrotors der Windkraft- oder Windenergieanlage auf und/oder an dem Polradgehäuse des Rotors anordnenbar und/oder angeordnet sind.

Windenergieanlagen oder Windkraftanlagen weisen am Turm sich um eine Rotationsachse drehende Komponenten, wie die Windrotornabe, an welcher die Flügel angeordnet sind, oder den Rotor des am oder im Maschinenhaus angeordneten Generators auf. Mit diesen rotierenden Komponenten rotieren zum Teil auch mit elektrischen Steuerungs- oder Schaltelementen versehene Stahlschränke, die elektrische Einrichtungen der häufig getriebelosen Windenergieanlage steuern. So befindet sich in der Windrotornabe das Flügelverstellsystem oder auch Pitch-System, welches Elektromotoren umfasst, die jeweils mit mechanischen Komponenten zur Verstellung der an der Windrotornabe befestigten Flügel dienen. Zur Ansteuerung der Elektromotoren ist diesen jeweils ein Schaltschrank zugeordnet. Die Elektromotoren und die Schaltschränke sind in der rotierenden Nabe ortsfest angeordnet und rotieren mit der Nabe um die Rotationsachse der Windrotornabe. Die Schaltschränke sind wie übliche Schränke in Form eines rechteckigen Quaders ausgebildet und aus Platzgründen mit ihren Schmalseiten parallel zur Rotationsachse ausgerichtet. Üblicherweise werden elektrische Steuerungs- und/oder Schaltelemente und Bauteile auf einer Montageplatte angeordnet und dann mit dieser in einen jeweiligen Schaltschrank eingesetzt. Eine solche Montageplatte liegt dann auf der eine Rückwand des Schrankes ausbildenden Breitseite auf oder bildet eine solche Schrankrückwand auf. Hierbei werden elektrische Komponenten oder Bauteile, wie beispielsweise Schütze, in der Regel so auf der Montageplatte angeordnet, dass ihre translatorische Hin- und Herbewegung senkrecht zur Ebene der Montageplatte erfolgt, bei in einen vorstehend beschriebenen Schaltschrank eingebauter Montageplatte also in Richtung zur Schrankvorderseite und wieder zurück in Richtung zur Schrankrückwand, d.h. also in einer Richtung zwischen den beiden Breitseiten eines Schrankes. Wenn ein Schaltschrank mit einer solchen Konfiguration nun mit seinen Schmalseiten parallel zur Rotationsachse einer Nabe oder eines Generators angeordnet ist, führt dies dazu, dass während einer Rotationsumdrehung die elektrischen, eine Schaltbewegung durchführenden Bauteile, beispielsweise Schütze, permanent einer unterschiedlichen Beeinflussung durch die Erdanziehungskraft unterliegen. In den Positionen oberhalb und unterhalb der Rotationsachse wirkt die Erdanziehungskraft in die und gegen die Richtung der translatorischen Hin- und Her-Schaltbewegung der jeweiligen Steuerungs- und/oder Schaltelemente und in den Positionen seitlich der Rotationsachse der Windrotornabe wirkt die Erdanziehungskraft dann senkrecht zu der Richtung der Schaltbewegung. In den beiden ersten Positionen beeinflusst die Erdanziehungskraft somit die Schaltbewegung deutlich, während sie in den beiden anderen Fällen ohne Einfluss auf die Schaltbewegung ist. Je nach Stellung des jeweiligen Schaltschrankes unterliegt das jeweilige Schalt- und/oder Steuerungselement somit einer unterschiedlichen Beeinflussung durch die Erdanziehungskraft und somit einer unterschiedlichen Beeinflussung während seiner Schaltvorgänge. Dies führt zu einer ungleichmäßigen Belastung der Steuerungs- und/oder Schaltelemente in den verschiedenen Schaltschränken, die zu unterschiedlichen Abnutzungserscheinungen und damit unterschiedlichen Standzeiten führen. Um eine Beeinflussung der Erdanziehungskraft auf die Schaltbewegung der Steuerungs- und/oder Schaltelemente auszuschließen, müssen diese bei rotierender Anordnung so angeordnet sein, dass die Richtung der Schaltbewegung immer parallel zur Rotationsachse ausgerichtet ist. Zur Vermeidung dieser Problematik werden daher die Schaltschränke so angeordnet, dass die Schmalseiten der Schaltschränke parallel zur Rotationsachse ausgerichtet sind, wobei gleichzeitig dann die Steuerungs- und/oder Schaltelemente an diesen schmalen Seitenwänden der Schaltschränke angeordnet werden, so dass sie ihre Schaltbewegung parallel zur Rotationslängsachse ausführen können. Dies erfordert aber einen deutlich höheren Montageaufwand, da auf den Schmalseitenflächen weniger Platz als auf den Breitseitenflächen eines Stahlschrankes ist. Außerdem wird dadurch der Ort der Anordnung der Steuerungs- und/oder Schaltelemente von der Montageplatte entfernt, so dass eine zusätzliche Verkabelung von der an der breitseitigen Rückwand eines Stahlschrankes angeordneten Montageplatte zu den an den schmalseitigen Seitenwänden angeordneten Steuerungs- und/oder Schaltelementen, insbesondere Schützen, verlegt, installiert und angeschlossen werden muss. Für eine anderweitig ausgerichtete Positionierung der Schaltschränke in den rotierenden Komponenten, wie der Windrotornabe, ist bei den Ausführungsformen nach dem Stand der Technik aber bisher kein ausreichender Platz vorhanden.

Weiterhin weisen getriebelose Windenergieanlagen mit einem vielpoligen Synchrongenerator in der Regel eine relativ lange axiale Baugröße auf, weshalb am Turm einer solchen Windkraft- oder Windenergieanlage ein entsprechend dimensioniertes Maschinengehäuse ausgebildet sein muss. Eine solche einen Windrotor und einen Generator umfassende Baueinheit ist auf der Spitze eines Trägerturms um eine vertikale Achse verschwenkbar angeordnet. Hierbei steht ein Außenläufer des Generators über eine axiale Verlängerung sowie von der

Verlängerung nach innen gerichtete radiale Stege oder Flansche in Verbindung mit einer Nabe, über die der mit dieser Nabe verbundene Windrotor fliegend auf einer drehfest mit dem Stator des Generators verbundenen Achse gelagert ist.

Ein gattungsgemäßer Rotor eines Generators einer Windkraftanlage ist aus der DE 10 2007 024 528 A1 bekannt. Dieses Dokument offenbart einen Rotor eines Generators einer Windenergieanlage mit einem um einen Stator rotierenden, ein Polradgehäuse aufweisenden Polrad, wobei die Flügel des Windrotors der Windenergieanlage und eine Antriebseinheit für das Pitch-System an dem Polradgehäuse des Rotors angeordnet sind.

Aus der EP 1 959 132 A2 ist ein in der Rotornabe einer Windenergieanlage angeordnetes Pitch-System bekannt, wobei die diesem Pitch-System zugeordneten Schaltschränke ebenfalls in der Rotornabe angeordnet sind.

Der Erfindung liegt die Aufgabe zugrunde. eine Lösung zu schaffenµ, die eine vereinfachte Montagemöglichkeit für in rotierende Bauteile einer Windkraftanlage einzubauende Schaltschränke mit der Möglichkeit der Verminderung des Montageaufwandes und eine Verminderung der Anzahl und der Masse der am Geräteturm einer Windkraftanlage anzuordnenden rotierenden Bauteile bereitstellt.

Dabei sollen die in dem Schaltschrank angeordneten elektrischen Steuerungs- und/oder Schaltelemente in Bezug auf die während einer Rotationsumdrehung je nach Winkelstellung unterschiedlich auf diese einwirkende Erdanziehungskraft günstig ausgerichtet werden.

Bei einem Rotor der eingangs bezeichneten Art wird diese Aufgabe erfindungsgemäß durch die Merkmale des Anspruchs 1 gelöst.

Durch die Erfindung wird somit eine Lösungsmöglichkeit bereitgestellt, die an einem Rotor eines Generators einer insbesondere getriebelosen Windenergieanlage oder Windkraftanlage Schaltschränke anordnet und dadurch mehr und ausreichend Platz für die Ausbildung und Anordnung von In rotierende Bauteile der Windkraftanlage zu platzierende Schaltschränke bereitstellt.

Hierdurch lassen sich bei getriebelosen Windenergieanlagen oder Windkraftanlagen dann vorteilhaft dem Rotor oder dem Polrad mit den darin oder daran angeordneten Schaltschränken das Flügelverstellsystem und auch gleichzeitig die zugeordneten Flügel des Windrotors zuordnen und lässt sich damit der Rotor des Generators gleichzeitig als die Flügel tragender Windrotor ausbilden.

Auf diese Weise lässt sich die Baulänge einer getriebelosen Windenergie- oder Windkraftanlage deutlich reduzieren.

Es ist dadurch möglich, den Windrotor so weit zum Trägerturm zurückzusetzen, dass das die Flügel haltende Polradgehäuse, welches dann allein die Nabe des Windrotors bildet, in Richtung der Rotordrehachse nicht weiter als der daraus gebildete Generator insgesamt am Trägerturm hervorsteht.

In Ausgestaltung der Erfindung ist es hierbei dann weiterhin auch möglich, dass die Flügel des Windrotors auf oder an einer axialen Verlängerung des Polradgehäuses angeordnet sind. Wenn der Rotor oder das Polradgehäuse des Generators ggf. mit der axialen Verlängerung, auf welcher ggf. die Flügel auch angeordnet sein können, auf einer rohrförmigen oder zylinderförmigen Statoranordnung gelagert ist, lässt sich eine große Material- und Gewichtsreduzierung erreichen.

Insbesondere ist es günstig, die elektrische Komponenten für die Verstellung der Flügel beinhaltenden Schaltschränke erfindungsgemäß anzuordnen, da sich die Schaltschränke dann mit den Flügeln der Windenergieanlage oder Windkraftanlage gleichmäßig mit der Windrotornabe und dem Rotor oder Polrad drehen und in ihrer Relativlage zu einem jeweils zugeordneten Flügel ortsfest positioniert und angeordnet sind. Daher sind die Schaltschränke und die darin befindlichen elektrischen Steuerungs- und/oder Schaltelemente zweckmäßigerweise Bestandteil des Flügelverstellsystems (Pitch-System) der Windkraft- oder Windenergieanlage.

Eine besonders vorteilhafte Ausgestaltung der Erfindung besteht dann weiterhin darin, dass der Rotor als einen innenliegenden Stator umgebender Außenläufer ausgebildet ist.

In diesem Falle lässt sich die Rotorrückseite und damit die Polradgehäuserückseite sehr gut als Fläche oder Ort für die Ausbildung der Aufnahmeräume oder Aufnahmeflächen zur Aufnahme der Schaltschränke ausbilden und ausgestalten.

Eine besonders günstige Möglichkeit für die Bereitstellung des notwendigen Raumes wird gemäß Weiterbildung der Erfindung dadurch geschaffen, dass die Aufnahmeflächen und/oder Aufnahmeräume zur Aufnahme und/oder Ausbildung der Schaltschränke in der dem Stator abgewandten Rotor- und/oder Polradgehäuserückseite ausgebildet sind. Bei den heutzutage größer dimensionierten Rotoren und Generatoren von Windkraftanlagen lässt sich die Rückseite der Rotoren oder Polräder, insbesondere dann, wenn diese als Außenläufer konzipiert sind, geschickt als Platz und Ort für die Anordnung von Schaltschränken nutzen. Hierbei können die Aufnahmeräume sowohl als von der Polradaußenfläche der Polradgehäuserückseite her zugängliche Kavitäten als auch von der Polradinnenseite der Polradgehäuserückseite her zugängliche Kavitäten ausgebildet sein.

Insbesondere ist es aufgrund der geschaffenen verbesserten Platzverhältnisse dann auch möglich, dass die Schaltschränke zumindest im Wesentlichen die Form eines rechteckigen Quaders aufweisen und mit ihren größeren Seitenflächen, den Breitseiten, zumindest im Wesentlichen parallel zur Rotationsachse des Polradgehäuses zeigend und mit ihrer Längsachse im Wesentlichen senkrecht zur Rotationsachse des Polradgehäuses stehend ausgerichtet sind, was die Erfindung in weiterer Ausgestaltung vorsieht. In diesem Falle sind die Breitseiten dann parallel zur Rotationsachse angeordnet, so dass diese für Personal in der Gondel oder im Maschinenhaus auf dem Turm einer Windkraftanlage oder Windenergieanlage gut zugänglich sind, da die Stahlschränke dann mit ihrer Breitseite auch in der Längsrichtung der der Gondel oder des Maschinenhauses zeigend angeordnet sind. Dies ermöglicht es, bei der Montage auf Montageplatten, die in etwa der Größe einer Breitseitenfläche entsprechen, angeordnete elektrische Steuerungs- und/oder Schaltelemente zusammen mit der Montageplatte in einen Schaltschrank einzusetzen, so dass eine zusätzliche Verkabelung wie sie bisher beim Stand der Technik notwendig ist, entfällt.

Hierbei ist es dann weiterhin besonders zweckmäßig, wenn die Aufnahmeflächen und/oder Aufnahmeräume derart dimensioniert sind, dass darin zumindest eine die elektrischen Steuerungs- und/oder Schaltelemente tragende und vorzugsweise eine Breitseite eines Schaltschrankes ausbildende und insbesondere senkrecht zur Rotationsachse des Polradgehäuses stehende Montageplatte und/oder Schaltschrankrückseite anordnenbar und/oder angeordnet ist, was die Erfindung ebenfalls vorsieht. Die als Kavitäten ausgebildeten Aufnahmeräume können in diesem Falle die Form der Schaltschränke aufweisen, so dass darin lediglich noch die Montageplatte eingesetzt werden muss und dann ggf. eine die Kavität verschließende Schaltschrankrückseite noch aufgebracht werden muss. Hierbei kann es aber auch so sein, dass die Montageplatte gleichzeitig die die Kavität verschließende Schaltschrankrückseite ausbildet. Damit wird der Montageaufwand und Herstellaufwand für die Schaltschränke insofern weiter vermindert, als fünf Seiten des Schaltschrankes bereits in dem Polradgehäuse als quaderförmiger Aufnahmeraum in Form einer fünfseitig geschlossenen Kavität ausgebildet sind.

Um die elektrischen Steuerungs- und/oder Schaltelemente in Bezug auf die während einer Rotationsumdrehung je nach Winkelstellung unterschiedlich auf diese einwirkende Erdanziehungskraft günstig ausrichten zu können, zeichnet sich die Erfindung weiterhin dadurch aus, dass die elektrischen Steuerungs- und/oder Schaltelemente jeweils sich zum Schalten und/oder Lösen einer elektrisch leitenden Verbindung in einer Schaltbewegungsrichtung, insbesondere translatorisch, bewegende Bauteile aufweisen und diese in den Schaltschränken derart angeordnet und/oder die Schaltschränke derart ausgerichtet sind, dass die Schaltbewegungsrichtung der Bauteile zumindest im Wesentlichen parallel zur Rotationsachse des Polradgehäuses ausgerichtet ist.

Hierbei ist es dann von besonderem Vorteil, wenn die eine Schaltbewegung ausführende Bauteile aufweisenden Steuerungs- und/oder Schaltelemente mit ihrer Schaltbewegungsrichtung zumindest im Wesentlichen senkrecht zu den größeren Seitenflächen des jeweiligen Schaltschrankes ausgerichtet in diesen angeordnet sind, was die Erfindung ebenfalls vorsieht.

Von besonderem Vorteil ist die erfindungsgemäße Ausgestaltung dann, wenn die elektrischen Steuerungs- und/oder Schaltelemente Schütze sind, was die Erfindung auch vorsieht. Gerade Schütze werden durch die Schaffung der erfindungsgemäßen Anordnungsmöglichkeit dann gut montierbar in einer während des Rotationsbetriebes nicht der Erdanziehung unterworfenen Positionierung gut installierbar.

Beim erfindungsgemäßen Rotor lässt sich der Rotor des Generators insbesondere als Außenläufer konstruieren, so dass die Magnetbestückung des Rotors oder Polrades dann sehr weit an die Wicklung des Stators herangeführt werden kann, so dass ein relativ geringer, aber konstanter Luftspalt zwischen Rotor und Stator ausgebildet wird. Dies lässt sich dann weiterhin besonders günstig für eine berührungslose Übertragung elektrischer Energie zwischen Stator und Rotor nutzen. Die Erfindung zeichnet sich daher weiterhin dadurch aus, dass der Rotor Energieübertragungsmittel zur berührungslosen Übertragung elektrischer Energie zum oder vom Stator aufweist, die mit zugeordneten Energieübertragungsmitteln des Stators zusammenwirken, wobei die Energieübertragungsmittel in weiterer Ausgestaltung insbesondere das Flügelverstellsystem (Pitch-System) mit der benötigten elektrischen Energie versorgen. Hierbei können die Energieübertragungsmittel mindestens einen Gleichrichter zur Umwandlung der auf den Rotor übertragenen oder zu übertragenden elektrischen Energie in eine Gleichspannung umfassen, was die Erfindung ebenfalls vorsieht. Damit ist es dann möglich, relativ verlustfrei zwischen den Schaltschränken und den die Flügel verstellenden Elektromotoren sowie über den Stator die benötigte elektrische Energie zu übertragen. Diese Übertragung der elektrischen Energie geschieht auch verschleißfrei, da keine Übertragungsmittel, wie beispielsweise Schleifringe, vorgesehen sind. Beispielsweise kann unter Einschaltung von Gleichrichtern damit die Versorgung der zur Blattwinkeleinstellung der einzelnen Flügel oder Rotorblätter vorgesehenen, insbesondere an dem Polradgehäuse ortsfest angeordneten Elektromotoren, aber auch der Schaltschränke, mit der notwendigen elektrischen Energie, beispielsweise in Form von Gleichstrom oder Gleichspannung, Energie von dem nicht-drehenden Stator berührungslos auf den drehenden Rotor übertragen werden.

Durch die erfindungsgemäße Anordnung der Schaltschränke am oder im Polradgehäuse wird weiterhin erreicht, dass die elektrischen Steuerungs- und/oder Schaltelemente während der Rotation einem gleichförmigen Magnetfeld ausgesetzt sind. Dies insbesondere dann, wenn das Polradgehäuse mit Permanentmagneten versehen ist. Die Erfindung sieht daher schließlich in Ausgestaltung auch vor, dass die Schaltschränke mit den darin eingesetzten elektrischen Steuerungs- und/oder Schaltelementen gleichmäßig mit dem erzeugten elektrischen Feld rotieren und ohne Relativbewegung zum Magnetfeld einem bleibenden Magnetfeld ausgesetzt sind.

Die Erfindung ist nachstehend anhand einer Zeichnung beispielhaft näher erläutert. Diese zeigt in:
- Fig. 1: in perspektivischer Darstellung eine Innenansicht eines ersten Ausführungsbeispieles eines Polradgehäuses und in
- Fig. 2: in perspektivischer Darstellung eine Außenansicht eines zweiten Ausführungsbeispiels eines Polradgehäuses.

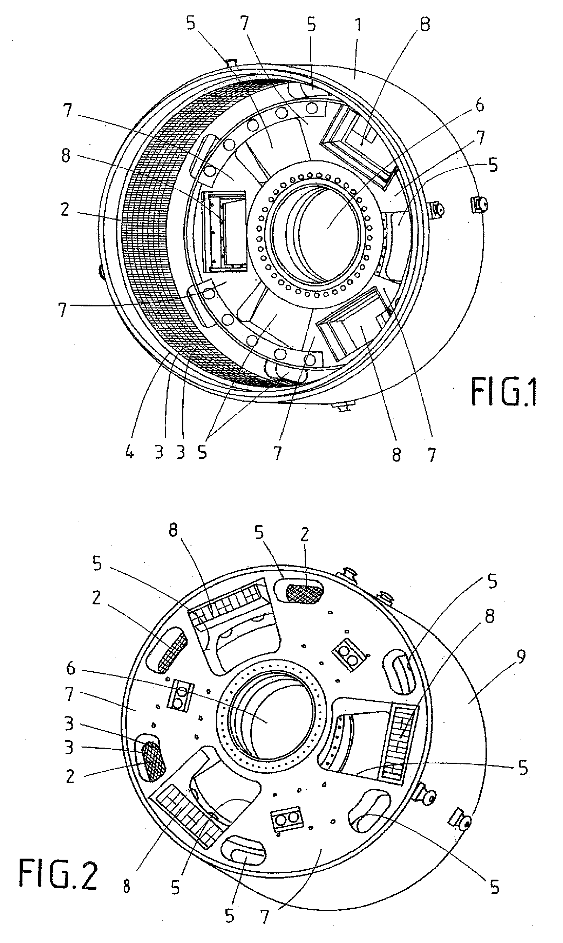

Die Fig. 1 zeigt ein Polradgehäuse 1 auf dessen Innenumfangsfläche ein Magnetrad 2 angeordnet ist. Das Magnetrad 2 weist eine Vielzahl nebeneinander angeordneter Einzelpermanentmagnete 3 auf, die innenseitig auf einem Rückschlussring 4 angeordnet sind. Auf einer Seite des Polradgehäuses 1 ist innerhalb der kreisförmigen Querschnittsfläche des Polrades 1 eine von Durchbrechungen 5 und einer zentralen Rotationsachsöffnung 6 durchbrochene Polradgehäuserückseite 7 in Form eines wandartigen Elements ausgebildet und angeordnet. Bei dem zur Ausbildung eines Außenläufers eines Generators vorgesehenen Polradgehäuse 1 ist in dessen Gebrauchsposition dann diese Polradgehäuserückseite 7 dem Stator abgewandt positioniert. In der Polradgehäuserückseite 7 sind drei Aufnahmeräume 8 in Form von rechteckförmigen, an fünf Seiten verschlossenen Kavitäten ausgebildet. Die Aufnahmeräume 8 sind so dimensioniert, dass sie jeweils einen Schaltschrank mit darin angeordneten elektrischen Steuerungs- und/oder Schaltelementen, die zum Schalten und/oder Lösen einer elektrisch leitenden Verbindung eine Schaltbewegung ausführende Bauteile aufweisen, aufnehmen oder nach Verschließen der zur Innenseite des Polradgehäuses 1 offenen Seitenfläche der Aufnahmeräume 8 sogar ausbilden. So ist es beispielsweise möglich, eine die elektrischen Steuerungs- und/oder Schaltelemente aufweisende Montageplatte in diesen Kavitäten derart anzuordnen, dass diese die offene Breitseitenfläche verschließt und dadurch mittels der Kavitäten ein Schaltschrank gebildet wird. Bei den elektrischen Steuerungs- und/oder Schaltelementen kann es sich um nicht dargestellte Schütze handeln, die Bestandteil des Flügelverstellsystems (Pitch-System) einer Windkraft- oder Windenergieanlage sind, wobei das Polradgehäuse Bestandteil eines Generators einer insbesondere getriebelosen Windkraftanlage oder Windenergieanlage ist. Die Aufnahmeräume 8 sind derart zu der in der Einbauposition des Polradgehäuses 1 in der Rotationsachsöffnung 6 positionierten Rotationsachse positioniert, dass sie mit ihren großen Breitseitenflächen im Wesentlichen parallel zur Rotationsachse des Polradgehäuses 1 zeigend sowie mit ihrer Längsachse im Wesentlichen senkrecht zur Rotationsachse des Polradgehäuses 1 stehend ausgerichtet sind. Hierbei sind die nicht dargestellten elektrischen Steuerungs- und/oder Schaltelemente dann weiterhin derart in den Aufnahmeräumen 8 angeordnet, dass ihre jeweilige, insbesondere zumindest im Wesentlichen translatorische Hin- und Her-Schaltbewegung ebenfalls zumindest im Wesentlichen parallel zur Rotationsachse ausgerichtet ist. Hierbei ist die Schaltbewegungsrichtung der elektrischen Steuerungs- und/oder Schaltelemente dann senkrecht auf den Breitseitenflächen stehend ausgerichtet.

Das in der Fig. 2 dargestellte Polradgehäuse 9 ist im Wesentlichen analog zum Polradgehäuse 1 aufgebaut und ausgebildet, so dass hier dieselben Bezugszeichen zur Bezeichnung der gleichen Elemente verwendet werden. Der einzige Unterschied besteht darin, dass im Polradgehäuse 9 die Aufnahmeräume 8 eine zur Außenseite hin offene Seitenfläche aufweisen, so dass von der Außenseite des Polrades 9 her eine Montageplatte darin eingesetzt werden kann, während die Aufnahmeräume 8 des Polradgehäuses 1 von der dazu entgegengesetzten Innenseite des Polradgehäuses 1 zugänglich sind.

In nicht dargestellter Weise können an der radialen Außenfläche der Polradgehäuse 1, 9 auf oder an dieser die Flügel des Windrotors der Windkraft- oder Windenergieanlage angeordnet sein, so dass das Polradgehäuse dann sowohl den Rotor des Generators als auch den Windrotor der Windkraftanlage ausbildet. Zur Befestigung der Flügel können auf der Außenfläche der Polradgehäuse 1, 9 angeschweißte oder angeflanschte Rohrstutzen oder Rohransätze vorgesehen sein. Es ist aber auch möglich, eine axiale Verlängerung der radialen Außenumfangsfläche der Polradgehäuse 1, 9 vorzusehen und darauf die Flügel anzuordnen. Da die Flügel verstellbar sein müssen und mit einem Flügelverstellsystem ausgestattet sind, bietet es sich an, neben den die Steuerungs- und/oder Schaltelemente für ein solches Flügelverstellsystem aufweisenden Schaltschränken auch die das Flügelverstellsystem antreibenden Elektromotoren in oder an den Polradgehäusen 1, 9 anzuordnen. Dabei ist es dann in ebenfalls nicht dargestellter Weise auch möglich, die für den Betrieb der Elektromotoren und den Betrieb der Steuerungs- und/oder Schaltelemente notwendige Versorgung mit elektrischer Energie berührungsfrei vom Stator auf das jeweilige Polradgehäuse 1, 9 des Rotors des Generators zu übertragen. Hierzu sind nicht näher dargestellte Energieübertragungsmittel sowohl am Stator als auch am Rotor angeordnet, die in einer jeweils festgelegten Zuordnung zusammenwirken. Hierbei können die Energieübertragungsmittel einen Gleichrichter zur Umwandlung der auf den Rotor zu übertragenden oder übertragenen elektrischen Energie in eine Gleichspannung umfassen.

## Patentansprüche

1. Rotor eines Generators einer Windkraftanlage oder einer Windenergieanlage mit einem in einem oder um einen Stator rotierenden, ein Polradgehäuse (1,9) aufweisenden Polrad, **dadurch gekennzeichnet, dass** elektrische Steuerungs- und/oder Schaltelemente zum Schalten und/oder Lösen einer elektrisch leitenden Verbindung mit in einer Schaltbewegungsrichtung beweglichen Bauteilen derart mitdrehend in Schaltschränken in oder an dem Polradgehäuse (1,9) angeordnet sind, dass die Schaltbewegungsrichtung im Wesentlichen parallel zur Rotationsachse des Polradgehäuses (1,9) ausgerichtet ist.

2. Rotor nach Anspruch 1, **dadurch gekennzeichnet, dass** die Flügel des Windrotors der Windkraft- oder Windenergieanlage auf oder an einer axialen Verlängerung des Polradgehäuses (1,9) angeordnet sind.

3. Rotor nach einem der vorhergehenden Ansprüche, **dadurch gekennzeichnet, dass** er als einen innenliegenden Stator umgebender Außenläufer ausgebildet ist.

4. Rotor nach einem der vorhergehenden Ansprüche, **dadurch gekennzeichnet, dass** in oder an dem Polradgehäuse (1,9) Aufnahmeflächen und/oder Aufnahmeräume (8) ausgebildet sind und daran und/oder darin Schaltschränke zur Aufnahme der elektrischen Steuerungs- und/oder Schaltelemente anordnenbar und/oder angeordnet sind.

5. Rotor nach Anspruch 4, **dadurch gekennzeichnet, dass** die Aufnahmeflächen und/oder Aufnahmeräume (8) zur Aufnahme und/oder Ausbildung der Schaltschränke in der dem Stator abgewandten Rotor- und/oder Polradgehäuserückseite (7) ausgebildet sind.

6. Rotor nach Anspruch 4 oder 5, **dadurch gekennzeichnet, dass** die Schaltschränke zumindest im Wesentlichen die Form eines rechteckigen Quaders aufweisen und mit ihren größeren Seitenflächen, den Breitseiten, zumindest im Wesentlichen parallel zur Rotationsachse des Polradgehäuses (1,9) zeigend und mit ihrer Längsachse im Wesentlichen senkrecht zur Rotationsachse des Polradgehäuses (1,9) stehend ausgerichtet sind.

7. Rotor nach einem der Ansprüche 4 - 6, **dadurch gekennzeichnet, dass** die Aufnahmeflächen und/oder Aufnahmeräume (8) derart dimensioniert sind, dass darin zumindest eine die elektrischen Steuerungs- und/oder Schaltelemente tragende und vorzugsweise eine Breitseite eines Schaltschrankes ausbildende und insbesondere senkrecht zur Rotationsachse des Polradgehäuses stehende Montageplatte und/oder Schaltschrankrückseite anordnenbar und/oder angeordnet ist.

8. Rotor nach einem der vorhergehenden Ansprüche, **dadurch gekennzeichnet, dass** die eine Schaltbewegung ausführende Bauteile aufweisenden Steuerungs- und/oder Schaltelemente mit ihrer Schaltbewegungsrichtung zumindest im Wesentlichen senkrecht zu den größeren Seitenflächen des jeweiligen Schaltschrankes ausgerichtet in diesen angeordnet sind.

9. Rotor nach einem der vorhergehenden Ansprüche, **dadurch gekennzeichnet, dass** die elektrischen Steuerungs- und/oder Schaltelemente Schütze sind.

10. Rotor nach einem der vorhergehenden Ansprüche, **dadurch gekennzeichnet, dass** er Energieübertragungsmittel zur berührungslosen Übertragung elektrischer Energie zum und vom Stator aufweist, die mit zugeordneten Energleübertragungsmitteln des Stators zusammenwirken.

11. Rotor nach Anspruch 10, **dadurch gekennzeichnet, dass** die Energieübertragungsmittel ein Flügelverstellsystem (Pitch-System) mit der benötigten elektrischen Energie versorgen.

12. Rotor nach Anspruch 10 oder 11, **dadurch gekennzeichnet, dass** die Energieübertragungsmittel mindestens einen Gleichrichter zur Umwandlung der auf den Rotor zu übertragenden oder übertragenen elektrischen Energie in eine Gleichspannung umfassen.

13. Rotor nach einem der vorhergehenden Ansprüche, **dadurch gekennzeichnet, dass** die die elektrischen Steuerungs-und/oder Schaltelemente während der Rotation einem gleichförmigen Magnetfeld ausgesetzt sind.

14. Rotor nach einem der vorhergehenden Ansprüche, **dadurch gekennzeichnet, dass** die elektrischen Steuerungs- und/oder Schaltelemente einem Flügelverstellsystem zugeordnet sind.

## Claims

1. Rotor of a generator of a wind power installation or wind energy installation comprising a pole wheel which rotates in a stator or around a stator and has a pole wheel housing (1, 9), **characterised in that** electrical control and/or switching elements to connect and/or disconnect an electrically conductive connection with parts movable in the direction of the switching direction are located in switchgear cabinets or at the pole wheel housing (1, 9) so that the direction of the switching movement is oriented substantially in parallel to the axis of rotation of the pole wheel housing (1,9).

2. Rotor according to claim 1, **characterised in that** the blades of the wind rotor of the wind power installation or wind energy installation are arranged on or at an axial extension of the pole wheel housing (1,9).

3. Rotor according to any of the preceding claims, **characterised In that** the rotor is In the form of an external rotor which surrounds an internal stator.

4. Rotor according to any of the preceding claims, **characterised in that** retaining surfaces and/or retaining spaces (8) are formed in or at the pole wheel housing (1,9) and switchgear cabinets comprising electrical control and/or switching elements arranged therein.

5. Rotor according to claim 4, **characterised In that** retaining surfaces and/or retaining spaces (8) for accommodating and/or forming the switchgear cabinets are formed in the rotor and/or pole wheel housing rear face (7) which faces away from the stator.

6. Rotor according to either claim 4 or claim 5, **characterised in that** the switchgear cabinets are at least substantially in the form of a rectangular cuboid and are oriented having their larger side faces, the broad faces, pointing at least substantially parallel to the axis of rotation of the pole wheel housing (1,9), and having their longitudinal axes are oriented substantially perpendicular to the axis of rotation of the pole wheel housing (1,9).

7. Rotor according to one of claims 4 - 6, **characterised in that** the retaining surfaces and/or retaining spaces (8) are of such a size that at least one mounting plate and/or switchgear cabinet rear face can be arranged and/or is arranged therein, which supports the electrical control and/or switching elements, preferably forms a broad face of a switchgear cabinet and is in particular perpendicular to the axis of rotation of the pole wheel housing.

8. Rotor according to any of the preceding claims, **characterised in that** the control and/or switching elements which have components which carry out a switching movement are arranged in the switchgear cabinets having their switching movement direction oriented at least substantially perpendicular to the larger side faces of the respective switchgear cabinet.

9. Rotor according to any of the preceding claims, **characterised in that** the electrical control and/or switching elements are contactors.

10. Rotor according to any of the preceding claims, **characterised in that** the rotor has power transmission means for contactless transmission of electrical power to and from the stator, which means Interact with associated power transmission means of the stator.

11. Rotor according to claim 10, **characterised in that** the power transmission means supply the blade control system (pitch system) with the required electrical power.

12. Rotor according to either claim 10 or claim 11, **characterised in that** the power transmission means comprise at least one rectifier for converting the electrical power to be transmitted or transmitted to the rotor to a DC voltage.

13. Rotor according to any of the preceding claims, **characterised in that** the electrical control and/or switching elements are subjected to a uniform magnetic field during rotation.

14. Rotor according to any of the preceding claims, **characterised In that** the electrical control and/or switching elements are allocated to a blade control system.

## Revendications

1. Rotor d'un générateur d'une installation d'énergie éolienne avec une roue polaire en rotation dans ou autour d'un stator et présentant un logement de roue polaire (1, 9), **caractérisé en ce que** des éléments de commande et/ou de commutation électriques aux fins d'activation et/ou d'arrêt d'une liaison électriquement conductrice et présentant des composants mobiles exécutant une opération de couplage dirigée, sont agencés dans des armoires de distribution dans ou contre le logement de la roue polaire (1, 9) de façon à être en rotation simultanée, de telle sorte que la direction de l'opération de couplage est orientée pour l'essentiel parallèlement à l'axe de rotation du logement de la roue polaire (1, 9).

2. Rotor selon la revendication 1, **caractérisé en ce que** les ailes du rotor éolien de l'installation d'électricité éolienne ou d'énergie éolienne sont agencées sur ou contre un prolongement axial du logement de la roue polaire (1, 9).

3. Rotor selon l'une des revendications précédentes, **caractérisé en ce qu'**il est réalisé sous la forme d'un induit extérieur entourant un stator intérieur.

4. Rotor selon l'une des revendications précédentes, **caractérisé en ce que** dans ou contre le logement de la roue polaire (1, 9) sont réalisés des surfaces de réception et/ou des espaces de réception (8), contre et/ou dans lesquels sont agencées et/ou peuvent être agencées des armoires de distribution pour la réception des éléments de commande et/ou de commutation électriques.

5. Rotor selon la revendication 4, **caractérisé en ce que** dans le côté arrière du logement de la roue polaire (7) et/ou du rotor en opposition au stator sont réalisés les surfaces de réception et/ou les espaces de réception (8) pour la réception et/ou la réalisation des armoires de distribution.

6. Rotor selon la revendication 4 ou 5, **caractérisé en ce que** les armoires de distribution présentent au moins pour l'essentiel la forme d'un parallélépipède rectangle et sont orientées, avec leurs surfaces latérales les plus grandes, vers les côtés des largeurs, se montrant au moins pour l'essentiel parallèles à l'axe de rotation du logement de la roue polaire (1,9) et se dressant avec leur axe longitudinal pour l'essentiel perpendiculairement à l'axe de rotation du logement de la roue polaire (1,9).

7. Rotor selon l'une des revendications 4-6, **caractérisé en ce que** les surfaces de réception et/ou les espaces de réception (8) présentent des dimensions telles qu'au moins une plaque de montage supportant les éléments de commande et/ou de commutation électriques, formant de préférence un côté de largeur d'une armoire de distribution et en particulier dressée perpendiculairement à l'axe de rotation du logement de la roue polaire, et/ou un côté arrière de l'armoire de distribution peuvent y être agencés et/ou y sont agencés.

8. Rotor selon l'une des revendications précédentes, **caractérisé en ce que** les éléments de commande et/ou de commutation présentant un composant exécutant une opération de couplage sont agencés avec la direction de leur opération de couplage au moins pour l'essentiel perpendiculairement aux surfaces latérales les plus grandes de l'armoire de distribution respective dans celle-ci.

9. Rotor selon l'une des revendications précédentes, **caractérisé en ce que** les éléments de commande et/ou de commutation électriques sont des contacteurs.

10. Rotor selon l'une des revendications précédentes, **caractérisé en ce qu'**il présente des moyens de transfert d'énergie aux fins du transfert sans contact d'énergie électrique vers et depuis le stator, lesquels coopèrent avec des moyens de transfert d'énergie adjoints au stator.

11. Rotor selon la revendication 10, **caractérisé en ce que** les moyens de transfert d'énergie fournissent l'énergie électrique nécessaire à un système de réglage des ailes (système de pas).

12. Rotor selon la revendication 10 ou 11, **caractérisé en ce que** les moyens de transfert d'énergie comprennent au moins un redresseur aux fins de la transformation de l'énergie électrique transmise ou à transmettre au rotor dans une tension continue.

13. Rotor selon l'une des revendications précédentes, **caractérisé en ce que** les éléments de commande et/ou de commutation électriques sont exposés à un champ magnétique homogène pendant la rotation.

14. Rotor selon l'une des revendications précédentes, **caractérisé en ce que** les éléments de commande et/ou de commutation électriques sont adjoints à un système de réglage des ailes.
